# EUROPEAN PATENT APPLICATION

(11) **EP 4 703 503 A1**
(43) Date of publication of application: **04.03.2026**
(21) Application number: 25173176.6
(22) Date of filing: 29.04.2025
(51) Int. Cl.: D01F 1/10, D01F 6/60

(54) **BIO-NYLON FIBER CONTAINING ANTIOXIDANT ACTIVE COMPONENTS AND PREPARATION METHOD THEREOF**

(30) Priority: 27.08.2024 CN 202411178586
(71) Applicant: BYHERB FUTURE HEALTH TECHNOLOGY (QINGDAO) CO., LTD., Qingdao, Shandong 266071 (CN); Byherb Fiber Inc., 20120 Centreville, VA (US)
(72) Inventor: HUANG, Xiaohua, Qingdao, Shandong, 266071 (CN); Huang, Yuanlong, Qingdao, Shandong, 266071 (CN)
(74) Representative: Lohr, Jöstingmeier & Partner Patent- und Rechtsanwälte mbB

(57) **Abstract**

The present disclosure a method for preparing a bio-nylon fiber containing antioxidant active components. The method includes: preparing a Buckwheat leaf extract, preparing a Yucca smalliana fern extract, preparing a porous base carrier, amination treatment, modification treatment, loading, preparing a functional masterbatch, and spinning. The method is capable of improving the binding performance between antioxidant active components derived from plant extracts and nylon fibers, effectively preventing the issue of reduced stability and deactivation of plant-derived active components during acidic dyeing processes. Additionally, this method effectively prevents the plant-derived active components from affecting the dyeing outcome, thereby avoiding issues of uneven dyeing, and further enhances the wash resistance and physical properties of the nylon fibers.

## Description

### CROSS-REFERENCES TO RELATED APPLICATIONS

The present disclosure claims priority to Chinese Patent Application No. 202411178586.0, filed on August 27, 2024, the content of which is incorporated herein by reference in its entirety.

### TECHNICAL FIELD

The present disclosure relates to the field of nylon fiber and, more specifically, relates to a bio-nylon fiber containing antioxidant active components and a preparation method thereof.

### BACKGROUND

Nylon fiber, known as Polyamide in English and polyamide in scientific name, is the first synthetic fiber in the world, with its invention dating back to the 1930s, created by the American chemist Carothers and his research team. Nylon fiber exhibits extremely high abrasion resistance, ranking first among all types of fabrics. Its abrasion resistance is approximately ten times higher than cotton and about twenty times higher than wool. Adding a small amount of nylon fiber to blended fabrics may significantly enhance the fabric's abrasion resistance. Simultaneously, nylon fiber also includes excellent strength, elasticity, and moisture absorption. When nylon fiber is stretched to 103-106%, the elasticity recovery rate may reach 100%. Fabrics made from nylon fiber can withstand certain pressures and tensions, providing superior wearing comfort and tactile feel compared to polyester fabric garments. In the prior art, nylon fiber has applications in clothing, industrial production, medical fields, and more. In the clothing field, nylon fiber is widely used for making sportswear, outdoor clothing, underwear, socks, etc., due to its good abrasion resistance, strength, and elasticity. Furthermore, nylon fiber may also be blended with other fibers to create garments of various styles. In the field of industrial production, the high strength and high abrasion resistance of nylon fiber make it an ideal choice for industrial fabrics, and nylon fiber is widely used in the production of tire cord fabric, ropes, conveyor belts, fishing nets, etc.

With the advancement of science and technology and the improvement of living standards, the basic performance of nylon fiber has gradually become insufficient to meet the diversified application requirements. There has been an increasing amount of research on the functional improvement of nylon, and functional nylon fibers are constantly being innovated, making the study and expansion of the application fields of functional nylon fibers of great significance.

Tea contains tea polyphenols, catechins, and other antioxidant active components; orange peel contains hesperidin, naringin, antioxidant active components; and plants like Yucca smalliana fern, knotweed, and grapes contain polyphenolic compounds, flavonoids, resveratrol, and other antioxidant active components, which exhibit ideal antioxidant performance. The prior art has already disclosed techniques for the antioxidant functional modification of nylon fibers using the above-mentioned plant extracts containing antioxidant active components. However, when using plant extracts to modify nylon fibers for antioxidant functionality, the binding performance between the antioxidant active components in the plant extracts and the nylon fibers is poor. In the subsequent dyeing process of nylon fibers, to achieve an ideal dyeing effect, it needs to be carried out in an acidic environment with a pH value of about 4-5 in conjunction with a dye. This not only reduces the stability of the active components in the plant extracts, causing them to easily lose effectiveness and fail to achieve the desired antioxidant performance, but it also reduces the dyeing effect, leading to uneven dyeing. Additionally, during repeated washing of nylon fibers, the antioxidant active components tend to be lost, resulting in poor wash resistance. Furthermore, in the process of modifying nylon fibers for antioxidant functionality using plant extracts, the addition of plant extracts may also affect the physical properties of nylon fibers.

### SUMMARY

One aspect of the present disclosure provides disclosure a method for preparing a bio-nylon fiber containing antioxidant active components. The method includes: preparing a Buckwheat leaf extract, preparing a Yucca smalliana fern extract, preparing a porous base carrier, amination treatment, modification treatment, loading, preparing a functional masterbatch, and spinning.

Another aspect of the present disclosure provides a bio-nylon fiber containing nylon 66 and a plurality of antioxidant active components, where the plurality of antioxidant active components are extracted from Buckwheat and Yucca smalliana fern.

### DETAILED DESCRIPTION

The present disclosure provides a nylon macro-biofiber containing antioxidant active components and a preparation method thereof. The method is able to improve the binding performance between antioxidant active components derived from plant extracts and nylon fiber, effectively preventing issues of reduced stability and deactivation of plant extract active components during acidic dyeing processes. Additionally, the method effectively prevents plant derived active components from affecting the dyeing result, thereby avoiding uneven dyeing, and further enhances the wash resistance and physical properties of the nylon fiber. The method includes preparing a Buckwheat leaf extract, preparing a Yucca smalliana fern extract, preparing a porous base carrier, amination treatment, modification treatment, loading, preparing a functional masterbatch, and spinning.

To better understand the technical features, objectives, and effects of the present disclosure, various embodiments of the present disclosure are provided as follows.

### Embodiment 1

One embodiment provides a method for preparing bio-nylon fiber containing antioxidant active components, specifically as follows:

### 1. Preparing a Buckwheat leaf extract

Clean Buckwheat leaves are frozen in a about -40 °C environment for about 42 hours, followed by freeze-drying using a low-temperature freeze dryer for about 22 hours. The Buckwheat leaves are then crushed at about 9000 rpm to a particle size of about 1700 mesh. The Buckwheat leaf powder is added to about 10 times the weight of an ethanol solution (about 55% by volume), subjected to an ultrasonic extraction for about 15 minutes, and filtered to obtain a first extract. The filter residue is added to about 8 times the weight of an ethanol solution (about 55% by volume), subjected to ultrasonic extraction for about 10 minutes, and filtered to obtain a second extract. The first extract and the second extract are combined and concentrated to about 42% of the original volume under a vacuum of about 0.06 MPa at about 62 °C to prepare the Buckwheat leaf extract.

The ultrasonic extraction is controlled at a temperature of about 40 °C, an ultrasonic extraction frequency of about 41 kHz, and an ultrasonic extraction power of about 200 W.

### 2. Preparing a Yucca smalliana fern extract

Clean Yucca smalliana fern stems and leaves are frozen in a -40 °C environment for about 42 hours, followed by freeze-drying using a low-temperature freeze dryer for about 22 hours. The Yucca smalliana fern is then crushed at about 9000 rpm to a particle size of about 1700 mesh. The Yucca smalliana fern powder is added to an ethanol solution (about 55% by volume) in an amount about 13 times the weight of the powder, subjected to ultrasonic extraction for about 15 minutes, and filtered to obtain a first extract. The filter residue is added to about 10 times the weight of an ethanol solution (about 55% by volume), subjected to ultrasonic extraction for about 10 minutes, and filtered to obtain a second extract. The first extract and the second extract are combined and concentrated to about 58% of the original volume under a vacuum of about 0.06 MPa at about 62 °C to prepare the Yucca smalliana fern extract.

The ultrasonic extraction is controlled at a temperature of about 40 °C, an ultrasonic extraction frequency of about 41 kHz, and an ultrasonic extraction power of about 200 W.

### 3. Preparing a porous base carrier

2-methylimidazole is added to about 18 times the weight of anhydrous methanol, stirred and dissolved to obtain a first liquid for standby use. Zinc nitrate hexahydrate and cerium nitrate hexahydrate are added to about 22 times the weight of anhydrous methanol, stirred and dissolved to obtain a second solution for standby use. Under stirring, the second solution is added to the first solution and stirred at room temperature for about 50 minutes, followed by standing for about 20 minutes to obtain a reaction solution. A solid is separated by centrifugation at about 11000 rpm, washed with about 2 times the weight of anhydrous methanol, and dried in a vacuum drying oven at about 65 °C under a vacuum of about 0.085 MPa to a constant weight. The dried material is ground to uniformity to prepare the porous base carrier.

The 2-methylimidazole, the zinc nitrate hexahydrate, and the cerium nitrate hexahydrate are in a molar ratio of about 2.2:0.7:0.35.

### 4. Amination treatment

The porous base carrier is added to about 6 times the weight of an ethanol solution (about 75% by volume), dispersed ultrasonically for about 5 minutes, and then stirred and heated to about 40 °C. After stirring for about 10 minutes at about 40 °C, a diamino silane coupling agent A-2120 is added dropwise over about 40 minutes. After completing the dropwise addition, stirring continues at about 40 °C for about 5 hours. A solid is separated by centrifugation at about 11000 rpm, washed with about 2.5 times the weight of deionized water, and dried in a vacuum drying oven at about 90 °C under a vacuum of about 0.085 MPa to a constant weight. The dried material is ground to uniformity to prepare an aminated carrier.

The porous base carrier, the diamino silane coupling agent A-2120 are in a weight ratio of about 1:0.16.

### 5. Modification treatment

Adipoyl chloride is added to a reactor containing tetrahydrofuran, stirred to dissolve, and the reactor's air is replaced with nitrogen. The aminated carrier is added and stirred at room temperature for about 10 hours. A solid is separated by centrifugation at about 11000 rpm, washed with about 1.5 times the weight of tetrahydrofuran, filtered, and added to a reactor containing N,N-dimethylformamide. The reactor's air is replaced with nitrogen, and about 1,2-ethanedithiol and triethylamine are added and stirred at room temperature for about 5 hours. A solid is separated by centrifugation at about 11000 rpm, washed with about 3 times the weight of deionized water, and dried in a vacuum drying oven at about 110 °C under a vacuum of about 0.085 MPa to a constant weight. The dried material is ground to uniformity to prepare a modified carrier.

The adipoyl chloride, the aminated carrier, the 1,2-ethanedithiol, and the triethylamine are in a weight ratio of about 4:25:0.5:0.9. The aminated carrier and the tetrahydrofuran are in a weight ratio of about 1:8. The aminated carrier and the N,N-dimethylformamide are in a weight ratio of about 1:4.

### 6. Loading

The Buckwheat leaf extract and the Yucca smalliana fern extract are mixed in equal volumes to prepare a loading solution. The modified carrier is added to the loading solution, dispersed ultrasonically for about 10 minutes, stirred, and heated to about 35°C. After stirring for about 5 hours at about 35°C, a solid is separated by centrifugation at about 11000 rpm, washed with about 3 times the weight of deionized water, and dried in a vacuum drying oven at about 80°C under a vacuum of about 0.04 MPa to a constant weight. The dried material is ground to uniformity to prepare a composite active component.

The modified carrier and the loading solution are in a weight ratio of about 1:6.

### 7. Preparing a functional masterbatch

The composite active component, nylon 66 chips, antioxidant SEED, polyvinylpyrrolidone, and sodium stearate are added to a twin-screw extruder, heated to about 260°C, and extruded after melting for about 25 minutes to prepare the functional masterbatch.

The composite active component, the nylon 66 chips, the antioxidant SEED, the polyvinylpyrrolidone, and the sodium stearate are in a weight ratio of about 11:83:0.9:0.7:0.65.

### 8. Spinning

Nylon 66 chips and the functional masterbatch are added to a spinning melt apparatus, extruded and melted at about 260°C, and spun using a screw spinning machine. The spinning speed is controlled at about 1700 m/min, followed by drawing, oiling, and winding to prepare bio-nylon fiber containing antioxidant active components.

The nylon 66 chips and the functional masterbatch are in a weight ratio of about 100:11.

The present embodiment also provides bio-nylon fiber containing antioxidant active components, prepared using the aforementioned method.

### Embodiment 2

One embodiment provides another method for preparing bio-nylon fiber containing antioxidant active components, specifically as follows:

### 1. Preparing a Buckwheat leaf extract

Clean Buckwheat leaves are frozen in a -38 °C environment for about 45 hours, followed by freeze-drying using a low-temperature freeze dryer for about 23 hours. The Buckwheat leaves are then crushed at about 9500 rpm to a particle size of about 1750 mesh. The Buckwheat leaf powder is added to about 11 times the weight of an ethanol solution (57% by volume), subjected to ultrasonic extraction for about 18 minutes, and filtered to obtain a first extract. The filter residue is added to about 9 times the weight of an ethanol solution (57% by volume), subjected to ultrasonic extraction for about 12 minutes, and filtered to obtain a second extract. The first extract and the second extract are combined and concentrated to about 43% of the original volume under a vacuum of about 0.065 MPa at about 63 °C to prepare the Buckwheat leaf extract.

The ultrasonic extraction is controlled at a temperature of about 42 °C, an ultrasonic extraction frequency of about 42 kHz, and an ultrasonic extraction power of about 240W.

### 2. Preparing a Yucca smalliana fern extract

Clean Yucca smalliana fern stems and leaves are frozen in a -38 °C environment for about 45 hours, followed by freeze-drying using a low-temperature freeze dryer for about 23 hours. The Yucca smalliana fern is then crushed at about 9500 rpm to a particle size of about 1750 mesh. The Yucca smalliana fern powder is added to about 14 times the weight of an ethanol solution (57% by volume), subjected to ultrasonic extraction for about 18 minutes, and filtered to obtain a first extract. The filter residue is added to about 11 times the weight of an ethanol solution (57% by volume), subjected to ultrasonic extraction for about 12 minutes, and filtered to obtain a second extract. The first extract and the second extract are combined and concentrated to about 59% of the original volume under a vacuum of about 0.065 MPa at about 63 °C to prepare the Yucca smalliana fern extract.

The ultrasonic extraction is controlled at a temperature of about 42 °C, an ultrasonic extraction frequency of about 42 kHz, and an ultrasonic extraction power of about 240W.

### 3. Preparing a porous base carrier

2-methylimidazole is added to about 19 times the weight of anhydrous methanol, stirred and dissolved to obtain a first solution for standby use. Zinc nitrate hexahydrate and cerium nitrate hexahydrate are added to about 23 times the weight of anhydrous methanol, stirred and dissolved to obtain a second solution for standby use. Under stirring, the second solution is added to the first solution and stirred at room temperature for about 55 minutes, followed by standing for about 25 minutes to obtain a reaction solution. A solid is separated by centrifugation at about 11500 rpm, washed with about 2.3 times the weight of anhydrous methanol, and dried in a vacuum drying oven at about 68 °C under a vacuum of about 0.09 MPa to a constant weight. The dried material is ground to uniformity to prepare the porous base carrier.

The 2-methylimidazole, the zinc nitrate hexahydrate, and the cerium nitrate hexahydrate are a molar ratio of about 2.25:0.75:0.38.

### 4. Amination treatment

The porous base carrier is added to about 6.5 times the weight of an ethanol solution (about 78% by volume), dispersed ultrasonically for about 8 minutes, and then stirred and heated to about 42 °C. After stirring for about 12 minutes at about 42 °C, a diamino silane coupling agent A-2120 is added dropwise over about 45 minutes. After completing the dropwise addition, stirring continues at about 42 °C for about 5.5 hours. A solid is separated by centrifugation at about 11500 rpm, washed with about 2.8 times the weight deionized water, and dried in a vacuum drying oven at about 92 °C under a vacuum of about 0.09 MPa to a constant weight. The dried material is ground to uniformity to prepare an aminated carrier.

The porous base carrier and the diamino silane coupling agent A-2120 are in a weight ratio of about 1:0.18.

### 5. Modification treatment

Adipoyl chloride is added to a reactor containing tetrahydrofuran, stirred to dissolve, and the reactor's air is replaced with nitrogen. The aminated carrier is added and stirred at room temperature for about 11 hours. A solid is separated by centrifugation at about 11500 rpm, washed with about 1.6 times the weight of tetrahydrofuran, filtered, and added to a reactor containing N,N-dimethylformamide. The reactor's air is replaced with nitrogen, and 1,2-ethanedithiol and triethylamine are added and stirred at room temperature for about 5.5 hours. A solid is separated by centrifugation at about 11500 rpm, washed with about 3.2 times the weight of deionized water, and dried in a vacuum drying oven at about 115 °C under a vacuum of about 0.09 MPa to a constant weight. The dried material is ground to uniformity to prepare a modified carrier.

The adipoyl chloride, the aminated carrier, the1,2-ethanedithiol, and the triethylamine are in a weight ratio of about 4.1:25.5:0.53:0.92.

The aminated carrier and the tetrahydrofuran are in a weight ratio of about 1:8.5.

The aminated carrier and the N,N-dimethylformamide are in a weight ratio of about 1:4.5.

### 6. Loading

The Buckwheat leaf extract and the Yucca smalliana fern extract are mixed in equal volumes to prepare a loading solution. The modified carrier is added to the loading solution, dispersed ultrasonically for about 15 minutes, stirred, and heated to about 38 °C. After stirring for about 5.5 hours at about 38 °C, a solid is separated by centrifugation at about 11500 rpm, washed with about 3.2 times the weight of deionized water, and dried in a vacuum drying oven at about 83 °C under a vacuum of about 0.045 MPa to a constant weight. The dried material is ground to uniformity to prepare a composite active component.

The modified carrier and the loading solution are in a weight ratio of about 1:6.3.

### 7. Preparing a functional masterbatch

The composite active component, nylon 66 chips, antioxidant SEED, polyvinylpyrrolidone, and sodium stearate are added to a twin-screw extruder, heated to about 263 °C, and extruded after melting for about 30 minutes to prepare the functional masterbatch.

The composite active component, the nylon 66 chips, the antioxidant SEED, the polyvinylpyrrolidone, and the sodium stearate are in a weight ratio of about 11.5:85:1:0.75:0.7.

### 8. Spinning

Nylon 66 chips and the functional masterbatch are added to a spinning melt apparatus, extruded and melted at about 263 °C, and spun using a screw spinning machine. The spinning speed is controlled at about 1800 m/min, followed by drawing, oiling, and winding to prepare bio-nylon fiber containing antioxidant active components.

The nylon 66 chips and the functional masterbatch are in a weight ratio of about 100:11.7.

The present embodiment also provides bio-nylon fiber containing antioxidant active components, prepared using the aforementioned method.

### Embodiment 3

One embodiment provides yet another method for preparing bio-nylon fiber containing antioxidant active components, specifically as follows:

### 1. Preparing a Buckwheat leaf extract

Clean Buckwheat leaves are frozen in a about -35 °C environment for about 48 hours, followed by freeze-drying using a low-temperature freeze dryer for about 24 hours. The Buckwheat leaves are then crushed at about 10000 rpm to a particle size of about 1800 mesh. The Buckwheat leaf powder is added to about 12 times the weight of an ethanol solution (about 60% by volume), subjected to ultrasonic extraction for about 20 minutes, and filtered to obtain a first extract. The filter residue is added to about 10 times the weight of an ethanol solution (about 60% by volume), subjected to ultrasonic extraction for about 15 minutes, and filtered to obtain a second extract. The first extract and the second extract are combined and concentrated to about 45% of the original volume under a vacuum of about 0.07 MPa at about 65 °C to prepare the Buckwheat leaf extract.

The ultrasonic extraction is controlled at a temperature of about 45 °C, an ultrasonic extraction frequency of about 43 kHz, and an ultrasonic extraction power of about 250W.

### 2. Preparing a Yucca smalliana fern extract

Clean Yucca smalliana fern stems and leaves are frozen in a about -35 °C environment for about 48 hours, followed by freeze-drying using a low-temperature freeze dryer for about 24 hours. The Yucca smalliana fern is then crushed at about 10000 rpm to a particle size of about 1800 mesh. The Yucca smalliana fern powder is added to about 15 times the weight of an ethanol solution (about 60% by volume), subjected to ultrasonic extraction for about 20 minutes, and filtered to obtain a first extract. The filter residue is added to about 12 times the weight of an ethanol solution (about 60% by volume), subjected to ultrasonic extraction for about 15 minutes, and filtered to obtain a second extract. The first extract and the second extract are combined and concentrated to about 60% of the original volume under a vacuum of about 0.07 MPa at about 65 °C to prepare the Yucca smalliana fern extract.

The ultrasonic extraction is controlled at a temperature of about 45 °C, an ultrasonic extraction frequency of about 43 kHz, and an ultrasonic extraction power of about 250W.

### 3. Preparing a porous base carrier

2-methylimidazole is added to about 20 times the weight of anhydrous methanol, stirred and dissolved to obtain a first solution for standby use. Zinc nitrate hexahydrate and cerium nitrate hexahydrate are added to about 24 times the weight of anhydrous methanol, stirred and dissolved to obtain a second solution for standby use. Under stirring, the second solution is added to the first solution and stirred at room temperature for about 60 minutes, followed by standing for about 30 minutes to obtain a reaction solution. A solid is separated by centrifugation at about 12000 rpm, washed with about 2.5 times the weight of anhydrous methanol, and dried in a vacuum drying oven at about 70 °C under a vacuum of about 0.095 MPa to a constant weight. The dried material is ground to uniformity to prepare the porous base carrier.

The 2-methylimidazole, the zinc nitrate hexahydrate, and the cerium nitrate hexahydrate are in a molar ratio of about 2.3:0.8:0.4.

### 4. Amination treatment

The porous base carrier is added to about 7 times the weight of an ethanol solution (about 80% by volume), dispersed ultrasonically for about 10 minutes, and then stirred and heated to about 45 °C. After stirring for about 15 minutes at about 45 °C, the diamino silane coupling agent A-2120 is added dropwise over about 50 minutes. After completing the dropwise addition, stirring continues at about 45 °C for about 6 hours. A solid is separated by centrifugation at about 12000 rpm, washed with about 3 times the weight of deionized water, and dried in a vacuum drying oven at about 95 °C under a vacuum of about 0.095 MPa to a constant weight. The dried material is ground to uniformity to prepare an aminated carrier.

The porous base carrier and the diamino silane coupling agent A-2120 are in a weight ratio of about 1:0.19.

### 5. Modification treatment

Adipoyl chloride is added to a reactor containing tetrahydrofuran, stirred to dissolve, and the reactor's air is replaced with nitrogen. The aminated carrier is added and stirred at room temperature for about 12 hours. A solid is separated by centrifugation at about 12000 rpm, washed with about 1.8 times the weight of tetrahydrofuran, filtered, and added to a reactor containing N,N-dimethylformamide. The reactor's air is replaced with nitrogen, and 1,2-ethanedithiol and triethylamine are added and stirred at room temperature for about 6 hours. A solid is separated by centrifugation at about 12000 rpm, washed with about 3.5 times the weight of deionized water, and dried in a vacuum drying oven at about 120 °C under a vacuum of about 0.095 MPa to a constant weight. The dried material is ground to uniformity to prepare a modified carrier.

The adipoyl chloride, the aminated carrier, the 1,2-ethanedithiol, and the triethylamine are in a weight ratio of about 4.2:26:0.55:0.95.

The aminated carrier and the tetrahydrofuran are in a weight ratio of about 1:9.

The aminated carrier and the N,N-dimethylformamide are in a weight ratio of about 1:5.

### 6. Loading

The Buckwheat leaf extract and the Yucca smalliana fern extract are mixed in equal volumes to prepare a loading solution. The modified carrier is added to the loading solution, dispersed ultrasonically for about 20 minutes, stirred, and heated to about 40 °C. After stirring for about 6 hours at about 40 °C, a solid is separated by centrifugation at about 12000 rpm, washed with about 3.5 times the weight of deionized water, and dried in a vacuum drying oven at about 85 °C under a vacuum of about 0.05 MPa to a constant weight. The dried material is ground to uniformity to prepare a composite active component.

The modified carrier and the loading solution are in a weight ratio of about 1:6.5.

### 7. Preparing a functional masterbatch

The composite active component, nylon 66 chips, antioxidant SEED, polyvinylpyrrolidone, and sodium stearate are added to a twin-screw extruder, heated to about 265 °C, and extruded after melting for about 35 minutes to prepare the functional masterbatch.

The composite active component, the nylon 66 chips, the antioxidant SEED, the polyvinylpyrrolidone, and the sodium stearate are in a weight ratio of about 12:86:1.1:0.8:0.75.

### 8. Spinning

Nylon 66 chips and the functional masterbatch are added to a spinning melt apparatus, extruded and melted at about 265 °C, and spun using a screw spinning machine. The spinning speed is controlled at about 1850 m/min, followed by drawing, oiling, and winding to prepare bio-nylon fiber containing antioxidant active components.

The nylon 66 chips and the functional masterbatch are in a weight ratio of about 100:12.

The present embodiment also provides bio-nylon fiber containing antioxidant active components, prepared using the aforementioned method.

### Comparative Example 1

The technical solution of Embodiment 2 is adopted, with the following differences: 1) The step of preparing a Buckwheat leaf extract is omitted, and a Yucca smalliana fern extract is used as a loading solution in the subsequent loading step. 2) In the amination treatment, a silane coupling agent KH-550 is used instead of the diamino silane coupling agent A-2120.

### Comparative Example 2

The technical solution of Embodiment 2 is adopted, with the following differences: 1) The step of preparing a porous base carrier is omitted, and 3A zeolite powder is used instead of the porous base carrier in the subsequent steps. 2) The amination step is omitted, and the dried 3A zeolite powder is directly used in the modification treatment step.

### Comparative Example 3

The technical solution of Embodiment 2 is adopted, with the following differences: 1) In the step of preparing a porous base carrier, the addition of cerium nitrate hexahydrate is omitted, and the 2-methylimidazole and the zinc nitrate hexahydrate are in a molar ratio of controlled at about 2.25:1.05. 2) The modification treatment step is omitted, and an aminated carrier obtained from the amination treatment is directly used in the loading step.

The antioxidant performance and physical properties of the nylon fibers in Embodiments 1-3 and Comparative Examples 1-3 are tested. Specifically, the DPPH· free radical scavenging rate, ABTS⁺· free radical scavenging rate, hydroxyl free radical scavenging rate, breaking strength, and elongation at break are measured for each nylon fiber.

Specifically, the method for detecting the DPPH· free radical scavenging rate includes: weighing about 2.5 mg of 1,1-diphenyl-2-picrylhydrazyl (DPPH), dissolving in an appropriate amount of anhydrous ethanol, shaking well in the dark until fully dissolving, and then diluting to about 100.0 mL with anhydrous ethanol to prepare a DPPH ethanol solution with a concentration of about 25.0 mg/L.

About 2.0 g of the nylon fibers from Embodiments 1-3 and Comparative Examples 1-3 are weighed and placed into an ultrasonic extraction bottle containing about 50 mL of ethanol solution (about 60% by volume), respectively. After soaking for about 16 hours, ultrasonic extraction is performed for about 10 minutes. A filtrate is collected using a Buchner funnel. The filtrate is then transferred to a rotary evaporator, and the evaporation temperature is controlled at about 55 °C, the vacuum degree is about 0.085 MPa, and the filtrate is evaporated until it reaches about 2 mL. The evaporation is stopped, and the solution is diluted to about 4 mL with ethanol solution (about 60% by volume) to obtain a test solution.

About 1 mL of the test solution is added to about 2 mL of the DPPH ethanol solution, mixed well, and left to stand in the dark for about 10 minutes. The absorbance at a wavelength of about 517 nm is measured using a spectrophotometer to calculate the DPPH· free radical scavenging rate.

The method for detecting the ABTS⁺· free radical scavenging rate includes: weighing about 200.0 mg of 2,2'-azino-bis(3-ethylbenzothiazoline-6-sulfonic acid) diammonium salt (ABTS) and about 34.4 mg of potassium persulfate, dissolving in about 50.0 mL of deionized water, and letting stand in the dark at room temperature for about 24 hours to prepare an ABTS stock solution; and taking an appropriate amount of the ABTS stock solution and dilute it with ethanol solution (about 95% by volume) to achieve an absorbance of about 0.70 at a wavelength of about 734 nm, which serves as an ABTS working solution.

The preparation of a test solution follows the same method as described for the DPPH· free radical scavenging rate detection.

About 0.5 mL of a test solution is added to about 5 mL of the ABTS working solution, mixed well, and left to stand in the dark for about 10 minutes. The absorbance at a wavelength of about 734 nm is measured using a spectrophotometer to calculate the ABTS⁺· free radical scavenging rate.

The hydroxyl free radical scavenging rate is detected using the o-phenanthroline method.

The specific detection method for breaking strength and elongation at break refers to the national standard GB/T 14344-2022 "Test Method for Tensile Properties of Chemical Fiber Filaments."

The specific results are shown in the following table:

| Item | Embodiment 1 | Embodiment 2 | Embodiment 3 | Comparative Example 1 | Comparative Example 2 | Comparative Example 3 |
|---|---|---|---|---|---|---|
| DPPH· Free radical scavenging rate, % | 90.0 | 90.4 | 90.1 | 83.7 | 80.2 | 75.5 |
| ABTS⁺. Free radical scavenging rate, % | 88.4 | 88.7 | 88.6 | 80.9 | 78.3 | 74.1 |
| Hydroxy radical scavenging rate, % | 80.9 | 81.2 | 81.0 | 76.0 | 71.6 | 67.6 |
| Breaking strength, cN/dtex | 5.8 | 6.1 | 6.0 | 5.6 | 5.6 | 5.5 |
| Breaking elongation, % | 24.8 | 25.1 | 24.8 | 24.2 | 24.1 | 23.9 |

Furthermore, the antibacterial performance of the nylon fibers in Embodiments 1-3 and Comparative Examples 1-3 was tested. The specific method follows the relevant provisions of GB/T 20944.3-2008 "Evaluation of Antibacterial Properties for Textiles, Part 3: Oscillation Method."

The bacterial strains used in the antibacterial performance test include: Staphylococcus aureus (ATCC 6538), Escherichia coli (ATCC 8739), and Candida albicans (ATCC 10231).

The specific results are shown in the table below:

| Item | Embodiment 1 | Embodiment 2 | Embodiment 3 | Comparative Example 1 | Comparative Example 2 | Comparative Example 3 |
|---|---|---|---|---|---|---|
| Staphylococcus aureus antibacterial rate, % | 99.3 | 99.5 | 99.3 | 90.3 | 87.4 | 82.7 |
| Escherichia coli antibacterial rate, % | 98.7 | 99.0 | 98.8 | 88.7 | 86.8 | 82.1 |
| Candida albicans antibacterial rate, % | 95.3 | 95.6 | 95.5 | 85.9 | 82.4 | 78.0 |

Furthermore, the nylon fibers in Embodiments 1-3 and Comparative Examples 1-3 are subjected to dyeing tests, and dyeing percentage, half-dyeing time extension rate, dyeing color difference value, and colorfastness to washing grade are measured. The calculation of the half-dyeing time extension rate is based on the half-dyeing time of conventional nylon 66 fibers as the reference value. The half-dyeing time for the nylon fibers in Embodiments 1-3 and Comparative Examples 1-3, which include antioxidant active components, is compared to the reference value to evaluate the effect of the modification using antioxidant active components (i.e., composite active components) on the dyeing performance of the nylon fibers in the present disclosure.

The method for calculating the half-dyeing time extension rate is as follows:
[ (Half-dyeing time of nylon fibers containing antioxidant active components - Reference value) / Reference value] × 100%.

The specific results are shown in the table below:

| Item | Embodiment 1 | Embodiment 2 | Embodiment 3 | Comparative Example 1 | Comparative Example 2 | Comparative Example 3 |
|---|---|---|---|---|---|---|
| Dyeing percentage, % | 97.1 | 97.3 | 97.3 | 97.0 | 96.5 | 96.2 |
| Half-dyeing time extension rate, % | 4.0 | 3.8 | 3.9 | 4.3 | 4.7 | 4.9 |
| Dyeing color difference value, △E | 0.04 | 0.03 | 0.04 | 0.05 | 0.06 | 0.05 |
| colorfastness to washing grade | Grade 4 | Grade 4 | Grade 4 | Grade 4 | Grade 3 | Grade 3 |

Furthermore, the DPPH· free radical scavenging rate, ABTS⁺· free radical scavenging rate, hydroxyl free radical scavenging rate, and antibacterial performance of the dyed nylon fibers in Embodiments 1-3 and Comparative Examples 1-3 are tested. The specific results are shown in the table below:

| Item | Embodiment 1 | Embodiment 2 | Embodiment 3 | Comparative Example 1 | Comparative Example 2 | Comparative Example 3 |
|---|---|---|---|---|---|---|
| DPPH·Free radical scavenging rate, % | 89.2 | 89.7 | 89.3 | 80.3 | 71.9 | 69.6 |
| ABTS⁺·Free radical scavenging rate, % | 87.6 | 88.1 | 87.9 | 77.3 | 70.5 | 68.5 |
| Hydroxy radical scavenging rate, % | 80.1 | 80.4 | 80.2 | 72.8 | 64.4 | 62.1 |
| Staphylococcus aureus antibacterial rate, % | 98.1 | 98.5 | 98.2 | 85.9 | 77.9 | 76.2 |
| Escherichia coli antibacterial rate, % | 97.7 | 98.1 | 97.8 | 84.5 | 77.4 | 75.5 |
| Candida albicans antibacterial rate, % | 94.1 | 94.5 | 94.2 | 81.7 | 73.6 | 71.4 |

Furthermore, the nylon fibers from Embodiments 1-3 and Comparative Examples 1-3 are woven into fabrics and cut into about 20 cm × 20 cm washing test samples. The washing test samples are placed into a washing machine, with a washing water temperature set to about 45 °C. Each washing cycle lasted about 30 minutes, and after washing, the samples are air-dried naturally in a constant temperature environment of about 35 °C. The washing-drying process was repeated about 20 times. Afterward, the DPPH· free radical scavenging rate, ABTS⁺· free radical scavenging rate, hydroxyl free radical scavenging rate, and antibacterial performance of the dyed nylon fibers are tested. The specific results are shown in the table below:

| Item | Embodiment 1 | Embodiment 2 | Embodiment 3 | Comparative Example 1 | Comparative Example 2 | Comparative Example 3 |
|---|---|---|---|---|---|---|
| DPPH- Free radical scavenging rate, % | 83.0 | 83.6 | 83.3 | 75.5 | 70.0 | 63.8 |
| ABTS⁺·Free radical scavenging rate, % | 81.4 | 81.9 | 81.7 | 73.1 | 67.3 | 62.4 |
| Hydroxy radical scavenging rate, % | 74.8 | 75.2 | 75.0 | 68.2 | 62.6 | 57.3 |
| Staphylococcus aureus antibacterial rate, % | 90.7 | 91.4 | 91.1 | 81.1 | 75.0 | 69.5 |
| Escherichia coli antibacterial rate, % | 90.6 | 91.0 | 90.8 | 79.7 | 74.8 | 68.9 |
| Candida albicans antibacterial rate, % | 87.4 | 87.7 | 87.6 | 77.0 | 70.6 | 64.7 |

It can be seen that the preparation method of bio-nylon containing antioxidant active components in the present disclosure targets the characteristics of nylon fiber and antioxidant active components. In the step of preparing the porous base carrier, Zn/Ce bimetallic components are combined with the organic ligand 2-methylimidazole. Through the synergistic coordination effect of the Zn/Ce bimetallic active centers, the number of active sites in the porous base carrier is increased, thereby improving the subsequent binding stability with the antioxidant active components. Then, in the amination treatment step, a diamino silane coupling agent is used to perform amination treatment on the porous base carrier, effectively introducing amino groups. On one hand, this improves the subsequent modification treatment effect, ensures the binding effect between the modified carrier and the antioxidant active components, and enhances the stability of the antioxidant active components in nylon fiber. On the other hand, it improves the compatibility and binding performance of the composite active components containing antioxidant active components with nylon. Then, in the modification treatment step, the aminated carrier undergoes thiol modification treatment, further improving the binding stability and durability between the modified carrier and the antioxidant active components, thereby enhancing the functional stability in nylon fibers. In the loading step, the extracts of Buckwheat leaves and Yucca smalliana fern containing antioxidant active components, such as flavonoid compounds and polyphenolic compounds, are mixed to prepare the loading solution. The modified carrier is then used in the adsorption and bonding process to obtain the composite active components. Afterward, the composite active components are used to prepare the functional masterbatch, which is combined with nylon raw materials for spinning to produce bio-nylon fiber containing antioxidant active components. This method effectively improves the binding performance of the composite active components with the bio-nylon fiber, endows the bio-nylon fiber with antioxidant and antibacterial properties, achieves high levels of DPPH· free radical scavenging rate, ABTS⁺· free radical scavenging rate, and hydroxyl free radical scavenging rate, and ensures good breaking strength and elongation at break, along with excellent antibacterial performance.

At the same time, this method effectively prevents the antioxidant active components from interfering with the subsequent dyeing process, resulting in a high dyeing percentage for the bio-nylon fiber. Compared to conventional nylon fibers, the half-dyeing time extension is not significant, the color difference value of the dyed fibers is good, the dyeing is uniform, and the colorfastness to washing grade is high. Additionally, it avoids the problem of antioxidant active components becoming unstable and deactivated during acidic dyeing. After dyeing, the DPPH· free radical scavenging rate, ABTS⁺· free radical scavenging rate, hydroxyl free radical scavenging rate, and antibacterial performance of the fibers remain consistent with those before dyeing. Furthermore, the bio-nylon fiber exhibits excellent wash resistance, maintaining good antioxidant and antibacterial performance even after about 20 washes.

As shown in Comparative Example 1, omitting the use of Buckwheat leaf extract and substituting the diamino silane coupling agent A-2120 with the silane coupling agent KH-550 reduces the amination effect of the porous base carrier. This not only affects the subsequent thiol modification treatment, leading to reduced binding stability between the modified carrier and the antioxidant active components, but also reduces the stability of the antioxidant active components in the nylon fiber, and affects the compatibility and binding performance of the composite active components with nylon. This is specifically reflected in the significant reduction of the fiber's DPPH· free radical scavenging rate, ABTS⁺· free radical scavenging rate, hydroxyl free radical scavenging rate, and antibacterial performance, as well as the reduced antioxidant and antibacterial performance after about 20 washes.

As shown in Comparative Example 2, substituting the porous base carrier with 3A zeolite powder results in decreased binding stability between the carrier and the antioxidant active components. Omitting the amination step also leads to unsatisfactory modification treatment, failing to ensure the binding stability between the modified carrier and the antioxidant active components. As a result, the stability of the antioxidant active components in the nylon fiber is reduced, and the compatibility and binding performance of the composite active components with nylon are decreased. This causes the antioxidant active components to be easily lost or deactivated during the preparation and subsequent dyeing of the nylon fiber. Additionally, the wash resistance of the nylon fiber is reduced, and its long-term antioxidant and antibacterial performance is diminished. Specifically, the DPPH· free radical scavenging rate, ABTS⁺· free radical scavenging rate, hydroxyl free radical scavenging rate, and antibacterial performance of the fiber are reduced, along with a significant decrease in the antioxidant and antibacterial performance after dyeing and after about 20 washes.

As shown in Comparative Example 3, omitting cerium nitrate hexahydrate in the preparation of the porous base carrier prevents the synergistic coordination effect of the Zn/Ce bimetallic active centers from further increasing the number of active sites in the porous base carrier, reducing the subsequent binding stability with the antioxidant active components. Furthermore, omitting the modification treatment step reduces the binding stability and durability between the carrier and the antioxidant active components, lowering the functional stability of the nylon fiber and causing the antioxidant active components to be easily lost or deactivated during fiber preparation and subsequent dyeing. Additionally, the wash resistance of the nylon fiber is reduced, and its long-term antioxidant and antibacterial performance is diminished. Specifically, the DPPH· free radical scavenging rate, ABTS⁺· free radical scavenging rate, hydroxyl free radical scavenging rate, and antibacterial performance of the fiber are significantly reduced, the dyeing performance of the fiber is lowered, and the antioxidant and antibacterial performance of the fiber after dyeing and after about 20 washes is decreased.

Unless otherwise specified, the percentages used in the present disclosure refer to mass percentages.

Compared to existing technologies, the present disclosure provides the following beneficial effects.
(1) The preparation method of the bio-nylon fiber containing antioxidant active components in the present disclosure, targeting the characteristics of nylon fiber and the antioxidant active components in Buckwheat leaves and Yucca smalliana fern, includes the step of preparing a porous base carrier using a Zn/Ce bimetallic component in combination with the organic ligand 2-methylimidazole. Through the synergistic coordination effect of the Zn/Ce bimetallic active centers, the number of active sites in the porous base carrier is increased, thereby improving the subsequent binding stability with the antioxidant active components. Then, in the amination treatment step, the porous base carrier undergoes amination treatment using a diamino silane coupling agent, effectively introducing amino groups. This, on one hand, improves the effect of subsequent modification treatment, ensures the binding effect between the modified carrier and the antioxidant active components, and enhances the stability of the antioxidant active components in the nylon fiber. On the other hand, it improves the compatibility and binding performance between the composite active components containing antioxidant active components and nylon. Then, in the modification treatment step, the aminated carrier undergoes thiol modification treatment, further improving the binding stability and durability between the modified carrier and the antioxidant active components, thereby enhancing its functional stability in nylon fibers. In the loading step, an extract of Buckwheat leaves and Yucca smalliana fern containing antioxidant active components, such as flavonoid compounds and polyphenolic compounds, is selected. The Buckwheat leaf extract and Yucca smalliana fern extract are mixed to prepare a loading solution, and the modified carrier is used for adsorption and bonding in the loading process to obtain composite active components. Afterward, the composite active components are used to prepare functional masterbatch, which is combined with nylon raw materials for spinning to prepare bio-nylon fiber containing antioxidant active components. This may improve the binding performance between the antioxidant active components in plant extracts with nylon fiber, effectively avoiding the issue of reduced stability and easy deactivation of the antioxidant active components during the acidic dyeing process. It also avoids the negative impact of antioxidant active components on the dyeing effect and the issue of uneven dyeing. Additionally, it improves the wash resistance and physical properties of the bio-nylon fiber.
(2) The bio-nylon fiber containing antioxidant active components in the present disclosure exhibits a DPPH· free radical scavenging rate of about 90.0-90.4%, an ABTS⁺· free radical scavenging rate of about 88.4-88.7%, a hydroxyl free radical scavenging rate of about 80.9-81.2%, a breaking strength of about 5.8-6.1 cN/dtex, and an elongation at break of about 24.8-25.1%.
(3) The bio-nylon fiber containing antioxidant active components in the present disclosure has a Staphylococcus aureus antibacterial rate of about 99.3-99.5%, an Escherichia coli antibacterial rate of about 98.7-99.0%, and a Candida albicans antibacterial rate of about 95.3-95.6%.
(4) The bio-nylon fiber containing antioxidant active components in the present disclosure has a dye uptake percentage of about 97.1-97.3%, a half-dyeing time extension rate of about 3.8-4.0%, a color difference value △E of about 0.03-0.04, and a colorfastness to washing grade of 4.
(5) The bio-nylon fiber containing antioxidant active components in the present disclosure, after dyeing, exhibits a DPPH· free radical scavenging rate of about 89.2-89.7%, an ABTS⁺· free radical scavenging rate of about 87.6-88.1%, a hydroxyl free radical scavenging rate of about 80.0-80.4%, a Staphylococcus aureus antibacterial rate of about 98.1-98.5%, an Escherichia coli antibacterial rate of about 97.7-98.1%, and a Candida albicans antibacterial rate of about 94.1-94.5%.
(6) The bio-nylon fiber containing antioxidant active components in the present disclosure, after about 20 repeated washes, exhibits a DPPH· free radical scavenging rate of about 83.0-83.6%, an ABTS⁺· free radical scavenging rate of about 81.4-81.9%, a hydroxyl free radical scavenging rate of about 74.8-75.2%, a Staphylococcus aureus antibacterial rate of about 90.7-91.4%, an Escherichia coli antibacterial rate of about 90.6-91.0%, and a Candida albicans antibacterial rate of about 87.4-87.7%.

Finally, it should be noted that the above description is merely a preferred embodiment of the present disclosure and is not intended to limit the present disclosure. Although the present disclosure has been described in detail with reference to the aforementioned embodiments, those skilled in the art may still make modifications to the technical solutions described in the aforementioned embodiments or make equivalent replacements for certain technical features. Any modifications, equivalent replacements, or improvements made within the spirit and principles of the present disclosure should be included within the scope of protection of the present disclosure.

## Claims

1. A method for preparing a bio-nylon fiber comprising antioxidant active components, wherein the method comprises: preparing a Buckwheat leaf extract, preparing a Yucca smalliana fern extract, preparing a porous base carrier, amination treatment, modification treatment, loading, preparing a functional masterbatch, and spinning,
wherein preparing the Buckwheat leaf extract comprises freeze-drying and pulverizing Buckwheat leaves, followed by ultrasonic extraction and concentration to obtain the Buckwheat leaf extract;
wherein preparing the Yucca smalliana fern extract comprises freeze-drying and pulverizing stems and leaves of Yucca smalliana fern, followed by ultrasonic extraction and concentration to obtain the Yucca smalliana fern extract;
wherein preparing the porous base carrier comprises: adding 2-methylimidazole into anhydrous methanol and dispersing evenly to obtain a first solution; adding zinc nitrate hexahydrate and cerium nitrate hexahydrate into anhydrous methanol and dispersing evenly to obtain a second solution; adding the second solution into the first solution under stirring, stirring at room temperature, and then standing still to obtain a reaction solution; and separating a solid, washing, and drying the solid to obtain the porous base carrier;
wherein the amination treatment comprises: adding the porous base carrier into an ethanol solution, dispersing evenly, stirring and heating to about 40-45 °C, and adding a diamino silane coupling agent A-2120 dropwise under stirring; after adding the diamino silane coupling agent A-2120, continuing to stir at a constant temperature, separating a solid, washing, and drying the solid to obtain an aminated carrier;
wherein the modification treatment comprises: adding adipoyl chloride into tetrahydrofuran, and dispersing evenly; stirring and adding the aminated carrier in a nitrogen environment at room temperature for about 10-12 hours; separating a solid, washing, filtering, and adding the solid into N,N-dimethylformamide; stirring and adding 1,2-ethanedithiol and triethylamine in a nitrogen environment at room temperature for about 5-6 hours; and separating a solid, washing, and drying the solid to obtain a modified carrier;
wherein the loading comprises: mixing the Buckwheat leaf extract and the Yucca smalliana fern extract evenly to prepare a loading solution; adding the modified carrier into the loading solution, dispersing evenly, stirring and heating to about 35-40 °C; and separating a solid, washing, and drying the solid to obtain a composite active component; and
wherein preparing the functional masterbatch comprises using the composite active component to prepare the functional masterbatch.

2. The method according to any of the previous claims, wherein in preparing the porous base carrier,
a time for the stirring at room temperature after adding the second solution into the first solution under stirring, is about 50-60 minutes, and a time for the standing still is about 20-30 minutes; and
the 2-methylimidazole, the zinc nitrate hexahydrate, and the cerium nitrate hexahydrate are in a molar ratio of about (2.2-2.3):(0.7-0.8):(0.35-0.4).

3. The method according to any of the previous claims, wherein in the amination treatment, the ethanol solution has a concentration of about 75-80% by volume;
a time for the adding the diamino silane coupling agent A-2120 dropwise under stirring is about 40-50 minutes;
a time for the continuing to stir after adding the diamino silane coupling agent A-2120, is about 5-6 hours; and
the porous base carrier, the ethanol solution, and the diamino silane coupling agent A-2120 are in a weight ratio of about 1:(6-7):(0.16-0.19).

4. The method according to any of the previous claims, wherein in the modification treatment,
the adipoyl chloride, the aminated carrier, the 1,2-ethanedithiol, and the triethylamine are in a weight ratio of about (4-4.2):(25-26):(0.5-0.55):(0.9-0.95);
the aminated carrier and the tetrahydrofuran are in a weight ratio of about 1:(8-9); and
the aminated carrier and the N,N-dimethylformamide are in a weight ratio of about 1:(4-5).

5. The method according to any of the previous claims, wherein in the loading,
a stirring time after heating to about 35-40 °C is about 5-6 hours;
the Buckwheat leaf extract and the Yucca smalliana fern extract are in a volume ratio of about 1:1; and
the modified carrier and the loading solution are in a weight ratio of about 1:6-6.5.

6. The method according to any of the previous claims,
wherein preparing the Buckwheat leaf extract comprises:
freeze-drying and pulverizing the Buckwheat leaves to obtain a Buckwheat leaf powder with a particle size of about 1700-1800 mesh;
adding the Buckwheat leaf powder to about 10-12 times the weight of an ethanol solution, performing a first ultrasonic extraction of Buckwheat leaf, and filtering to obtain a first extract of Buckwheat leaf;
adding filter residue to about 8-10 times the weight of the ethanol solution, performing a second ultrasonic extraction of Buckwheat leaf, and filtering to obtain a second extract of Buckwheat leaf; and
combining the first extract of Buckwheat leaf and the second extract of Buckwheat leaf, and concentrating under vacuum to about 42-45% of an original volume to obtain the Buckwheat leaf extract;
wherein preparing the Yucca smalliana fern extract comprises:
freeze-drying and pulverizing stems and leaves of Yucca smalliana fern to obtain a Yucca smalliana fern powder with a particle size of about 1700-1800 mesh;
adding the Yucca smalliana fern powder to about 13-15 times the weight of an ethanol solution, performing a first ultrasonic extraction of Yucca smalliana fern, and filtering to obtain a first extract of Yucca smalliana fern;
adding filter residue to about 10-12 times the weight of an ethanol solution, performing a second ultrasonic extraction of Yucca smalliana fern, and filtering to obtain a second extract of Yucca smalliana fern; and
combining the first extract of Yucca smalliana fern and the second extract of Yucca smalliana fern, concentrating under vacuum to about 58-60% of an original volume to obtain the Yucca smalliana fern extract.

7. The method according to claim 6,
wherein in preparing the Buckwheat leaf extract,
the ethanol solution used in the first ultrasonic extraction of Buckwheat leaf and the second ultrasonic extraction of Buckwheat leaf has a concentration of about 55-60%; and
the first ultrasonic extraction of Buckwheat leaf and the second ultrasonic extraction of Buckwheat leaf both have an extraction temperature of about 40-45 °C, an ultrasonic extraction frequency of about 41-43 kHz, and an ultrasonic extraction power of about 200-250 W;
wherein in preparing the Yucca smalliana fern extract,
the ethanol solution used in the first ultrasonic extraction of Yucca smalliana fern and the second ultrasonic extraction of Yucca small Iana fern has a concentration of about 55-60%; and
the first ultrasonic extraction of Yucca smalliana fern and the second ultrasonic extraction of Yucca smalliana fern both have an extraction temperature of about 40-45 °C, an ultrasonic extraction frequency of about 41-43 kHz, and an ultrasonic extraction power of about 200-250 W.

8. The method according to any of the previous claims, wherein
preparing the functional masterbatch comprises: adding the composite active component, nylon 66 chips, antioxidant SEED, polyvinylpyrrolidone, and sodium stearate into a twin-screw extruder, heating to about 260-265 °C, melting at a constant temperature, and extruding to prepare the functional masterbatch; and
the composite active component, the nylon 66 chips, the antioxidant SEED, the polyvinylpyrrolidone, and the sodium stearate are in a weight ratio of about (11-12):(83-86):(0.9-1.1):(0.7-0.8):(0.65-0.75).

9. The method according to any of the previous claims, wherein
the spinning comprises: extruding and melting nylon 66 chips and the functional masterbatch at a temperature of about 260-265 °C, spinning and controlling at a spinning speed of about 1700-1850 m/min, followed by drawing, oiling, and winding to produce bio-nylon fiber comprising antioxidant active components; and
the nylon 66 chips and the functional masterbatch are in a weight ratio of about 100:(11-12).

10. A bio-nylon fiber, prepared according to the method of any of the previous claims, the bio-nylon fiber comprising nylon 66 and the plurality of antioxidant active components, wherein the plurality of antioxidant active components are extracted from the Buckwheat and the Yucca smalliana fern.
